# EUROPEAN PATENT APPLICATION

(11) **EP 4 706 382 A1**
(43) Date of publication of application: **11.03.2026**
(21) Application number: 25199892.8
(22) Date of filing: 03.09.2025
(51) Int. Cl.: A01K 1/02, A01K 1/03

(54) **MODULAR BASE FOR AN ANIMAL CAGE AND MODULAR BOTTOM FOR AN ANIMAL CAGE**

(30) Priority: 09.09.2024 IT 202400020038
(71) Applicant: Ferplast S.p.A., 36070 Castelgomberto (VI) (IT)
(72) Inventor: VACCARI, Nicola, 36070 CASTELGOMBERTO (Vicenza) (IT)
(74) Representative: Locatelli, Gian Matteo

(57) **Abstract**

A modular base (10) for an animal cage comprising at least a first base module (11), at least a second base module (12) and constraining means (13) configured to stably constrain the first base module (11) and the second base module (12). In particular, the constraining means (13) extends along a direction that is transverse, preferably perpendicular, to a main lying plane of the modular base (10) so as to generate a geometric interference to a reciprocal movement between the first base module (11) and the second base module (12) along a direction parallel to the main lying plane. The modular base (10) further comprises a sealing means (18) that is active or activatable on the constraining means (13) to prevent a leakage of fluid from the modular base (10).

## Description

### TECHNICAL FIELD

The present invention relates to a modular base for an animal cage, a modular bottom for an animal cage and an animal cage.

In particular, the present invention finds wide application in the field of cages for containing and transporting pets, for example rabbits, cats, dogs, rodents or other animals.

### PRIOR ART

The use of cages as containment structures for pets is currently well known as, in accordance with the respective abstracts, would be shown by US 9 167 799 B2, US 9 706 750 B2 and US 2022/272938 A1. Such cages are usually composed of a base, a roof and four vertical walls arranged orthogonally. Each of these components is made using various techniques, depending on the intended use. In general, the vertical walls, as well as the roof and at times the base, mainly consist of grids formed by a series of horizontal and vertical metal wires, arranged so as to create a net or a grid which prevents the animal from exiting.

The base has a substantially planar shape to define a support surface for the pet. Commonly, the base is made in a single piece with a perimeter wall to define a bottom for the cage. In particular, the bottom can be connected to the aforementioned vertical walls to define a cage for pets. The bottom has the shape of a basin and, in some cases, can act as a container for litter. Specifically, the litter can consist of a sandy or granular material which, in addition to absorbing excrement, provides a comfortable and warm environment for the animal.

Disadvantageously, the traditional cages intended for rabbits and other pets have limited flexibility in terms of dimensions and formats. Therefore, cages have been placed on the market whose bottom consists of two reciprocally connectable elements to increase or decrease the dimensions of the cage.

Disadvantageously, this type of bottom is not capable of effectively containing the liquids present inside the cage which, very often, passing through the junction areas of the two elements, pour onto the floor of the environment in which the cage is disposed.

Furthermore, the limited flexural-torsional stiffness of this type of bottom can contribute to the accidental opening of the cage and the escape of the pet.

### DESCRIPTION OF THE INVENTION

In this context, the technical task underlying the present invention is to propose a modular base for an animal cage, a modular bottom for an animal cage and an animal cage which overcome the aforementioned drawbacks of the prior art.

In particular, it is an object of the present invention to provide a modular base for an animal cage, a modular bottom for an animal cage and an animal cage which ensure a seal of the liquids present therein.

A further object of the present invention is to provide a modular base for an animal cage, a modular bottom for an animal cage and an animal cage having a high degree of operational flexibility and dimensional adaptability.

A further object of the present invention is to provide a modular base for an animal cage, a modular bottom for an animal cage and an animal cage which guarantee high dimensional stability and solidity to the bottom when assembled.

A further object of the present invention is to provide a modular base for an animal cage, a modular bottom for an animal cage and an animal cage having reduced overall dimensions when disassembled and, preferably, packaged to facilitate the transport thereof.

The stated technical task and specified objects are substantially achieved by a modular base for an animal cage, a modular bottom for an animal cage and an animal cage comprising the technical features disclosed in the independent claim.

The appended claims outline possible advantageous embodiments of the invention.

### ILLUSTRATION OF THE DRAWINGS

Additional features and advantages of the present invention will become more apparent from an approximate, and thus non-limiting, description of a preferred, but non-exclusive embodiment of a modular base for an animal cage, a modular bottom for an animal cage and an animal cage, as illustrated in the appended drawings, in which:

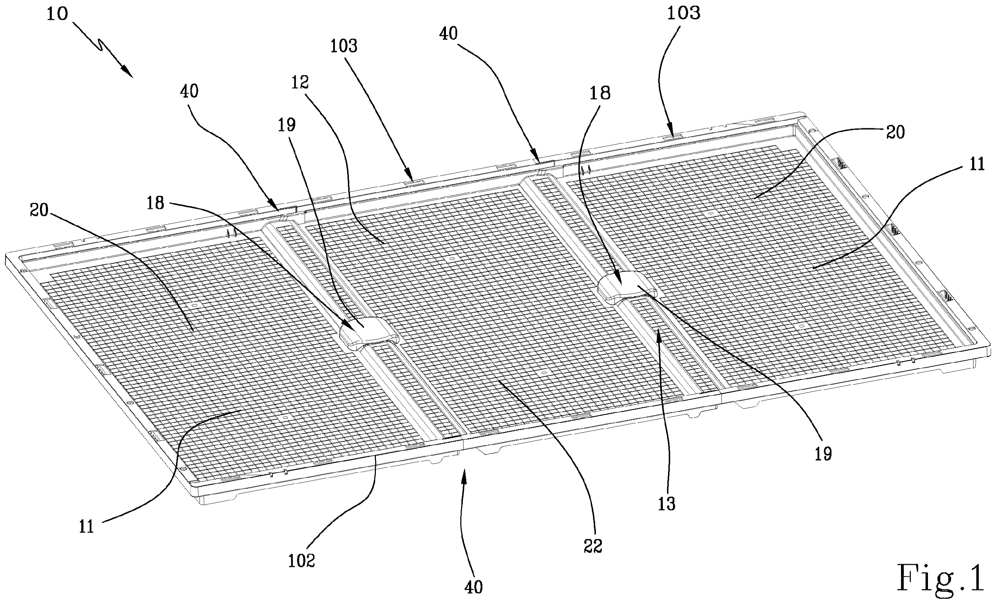

- Figure 1 shows a perspective view of a modular base for an animal cage in accordance with a possible embodiment of the present invention;
- Figures 2A-2B show respective enlarged sectional views of respective portions of the modular base for an animal cage of Figure 1;
- Figure 2C shows an enlarged view from above of a portion of the modular base for an animal cage of Figure 1;
- Figures 3A-3B show respective partial views of the modular base for an animal cage of Figure 1;
- Figures 4A-4B show respective perspective representations of a modular bottom for an animal cage in accordance with respective possible embodiments of the present invention;

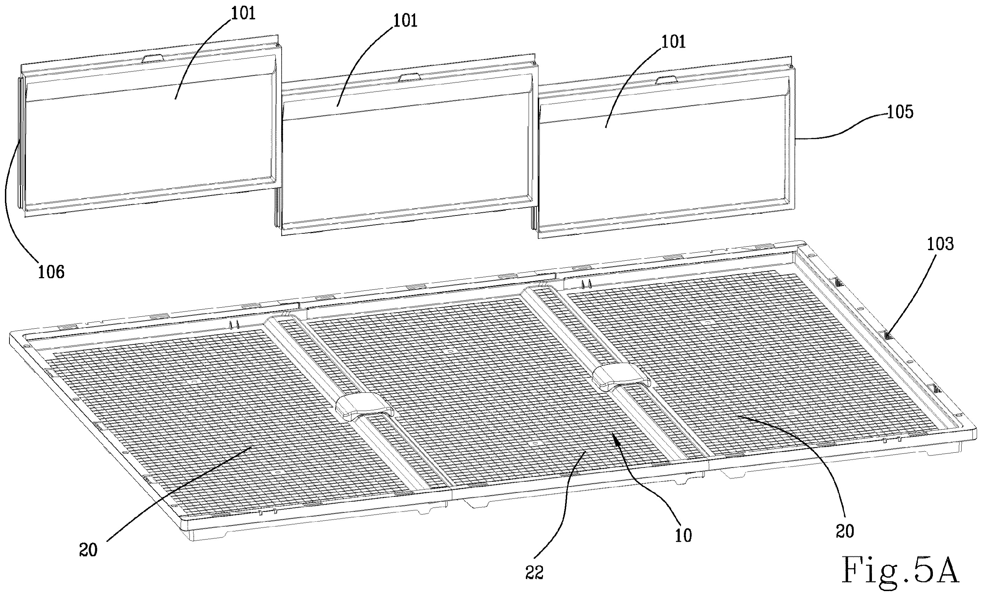

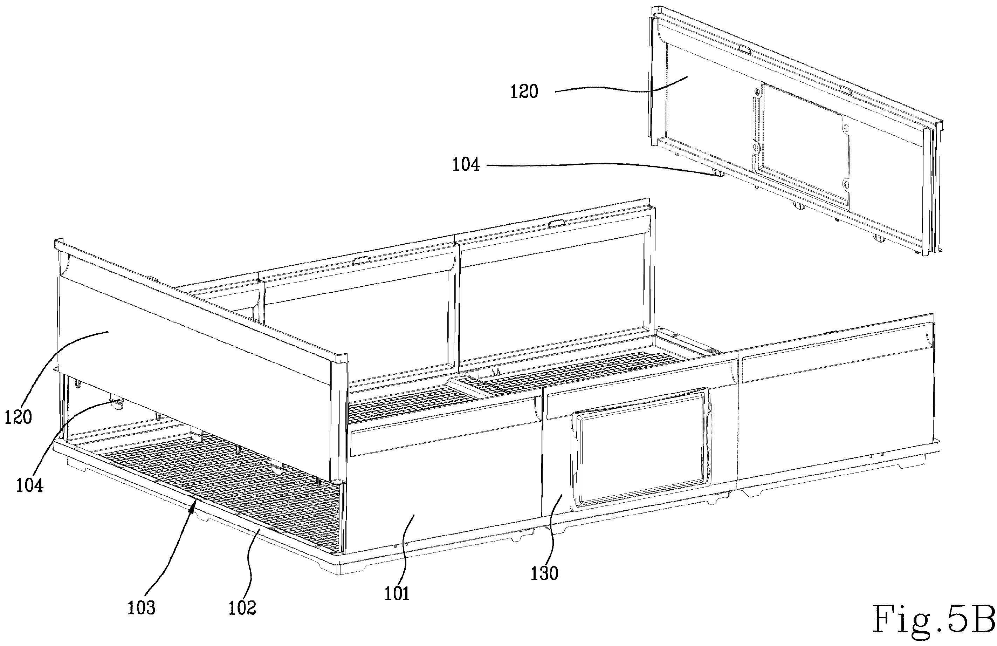

- Figures 5A-5B show respective perspective views of the modular bottom for an animal cage of Figure 4B in accordance with respective operating conditions;

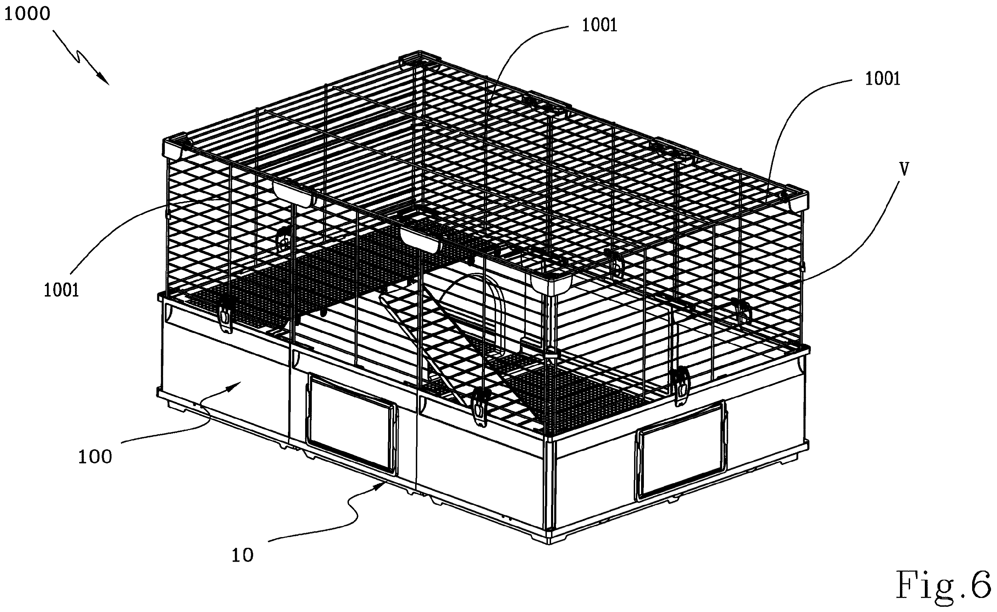

- Figure 6 shows a perspective view of an animal cage in accordance with a possible embodiment of the present invention.

### DESCRIPTION OF AN EMBODIMENT OF THE INVENTION

In accordance with the appended drawings, the reference number 10 has been used to generally designate a modular base for an animal cage, which will be referred to hereinafter as modular base 10.

The modular base 10 comprises at least a first base module 11, defining at least a first portion of the modular base 10, and at least a second base module 12, defining at least a second portion of the modular base 10.

The base modules 11, 12 can have a substantially plate-like shape so as to define a substantially flat support portion for an animal housed inside the cage.

The modular base 10 comprises a constraining means 13 configured to stably constrain the first base module 11 and the second base module 12. In particular, the constraining means 13 can extend mainly along a direction that is transverse, preferably perpendicular, to a lying plane of the modular base 10. Thereby, the constraining means 13 can generate a geometric interference to a reciprocal movement between the first base module 11 and the second base module 12 along a direction parallel to the main lying plane of the modular base 10.

That is, the constraining means 13 is configured to reciprocally constrain the base modules 11, 12 to make a modular base 10 having a marked flexural-torsional stiffness and a resistance to tensile stresses parallel to the aforementioned main lying plane. Thereby, the constraining means 13 gives the modular base 10 a high dimensional stability which facilitates the transport and cleaning thereof and the containment of the animal.

During a normal use configuration of the modular base 10, the main lying plane is preferably substantially horizontal and the constraining means 13 extends, preferably, along a vertical direction.

Preferably, the constraining means 13 is configured to make a shape coupling between the base modules 11, 12 allowing to make an easy and intuitive coupling between base modules 11, 12.

Furthermore, the constraining means 13 can be configured to make a reversible coupling between the base modules 11, 12, ensuring a flexible customisation of the modular base 10.

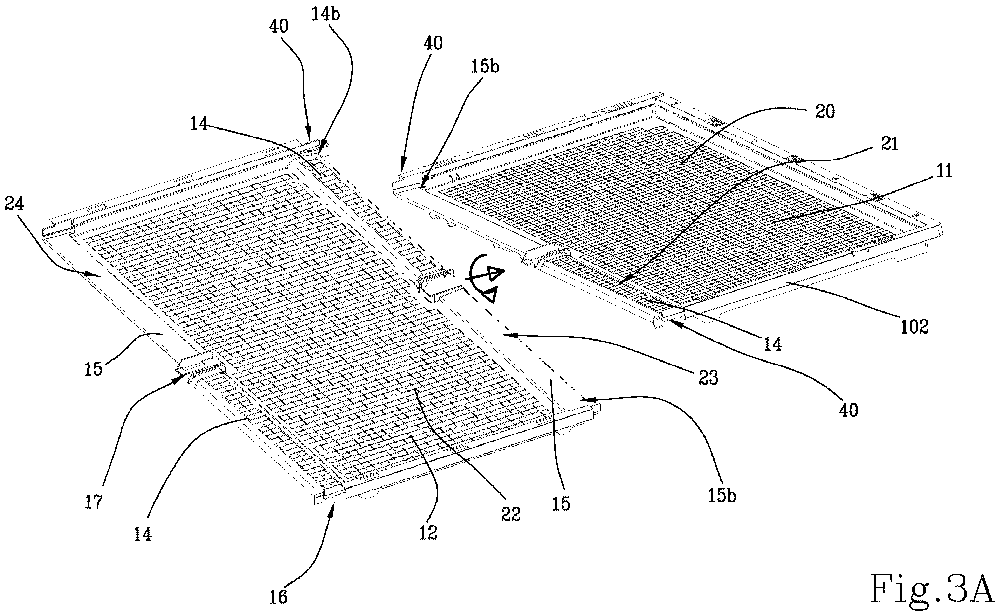

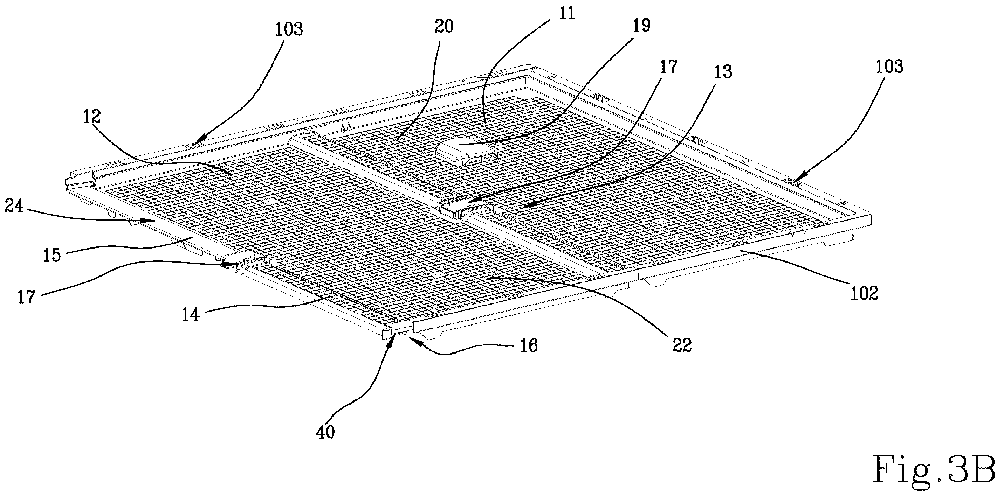

In accordance with a possible embodiment of the present invention and as illustrated in Figures 3A-3B, the constraining means 13 can be configured to make a bayonet-type coupling between the first base module 11 and the second base module 12 ensuring a particularly strong coupling between the base modules 11, 12. In particular, in the present discussion, "bayonet-type coupling" means a coupling in which two elements, for example the first base module 11 and the second base module 12, are connected by means of a reciprocal insertion and a subsequent reciprocal rotation.

Preferably, the constraining means 13 is arranged on perimeter portions of the base modules 11, 12. Furthermore, the constraining means 13 is preferably made in a single piece with the base modules 11, 12, thus simplifying the production process of the modular base 10.

Advantageously, the modular base 10 comprises a sealing means 18 which is active or activatable on the constraining means 13 to prevent a leakage of fluid from the modular base 10.

As illustrated in the attached figures, the constraining means 13 comprises at least one fastening element 14, disposed on the first base module 11 and/or on the second base module 12, and at least one abutment element 15, disposed on the first base module 11 and/or on the second base module 12. In particular, the abutment element 15 is shaped complementarily to the fastening element 14 and can be fastened by the fastening element 14 in order to constrain the first base module 11 and the second base module 12. For example, the fastening element 14 and the abutment element 15 can be operatively associated to make a shape coupling between the first base module 11 and the second base module 12.

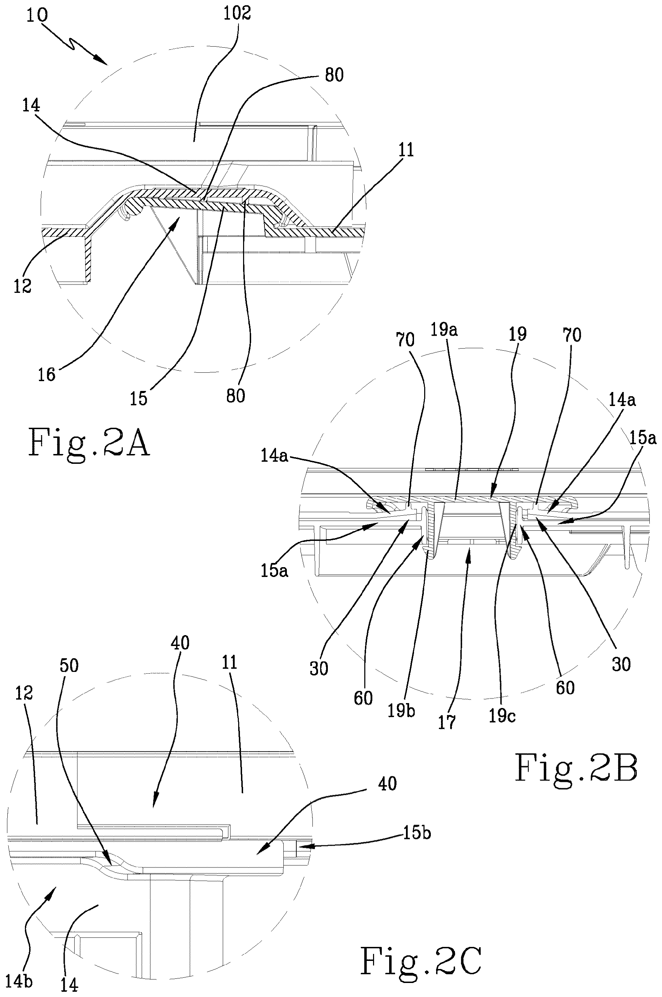

With particular reference to Figure 2A, the fastening element 14 and/or the abutment element 15 project from a perimeter portion of a respective base module 11, 12. For example, the fastening element 14 and/or the abutment element 15 can project from the first base module 11 and/or from the second base module 12 along a direction that is transverse, preferably perpendicular, to the aforementioned main lying plane of the modular base 10. Furthermore, the fastening element 14 can define a housing 16 adapted to insertingly receive the abutment element 15 so as to define a geometric interference to the reciprocal movement of the base modules 11, 12 along a direction substantially parallel to the aforementioned main lying plane of the modular base 10. Preferably, the housing 16 is configured to insertingly receive the abutment element 15 along a direction transverse to the aforementioned main lying plane.

In accordance with an advantageous aspect and as illustrated in Figure 2A, the at least one abutment element 15 defines a plane which is inclined relative to the main lying plane of the modular base 10 adapted to promote a downflow, by gravity, of a fluid from the abutment element 15 to the respective base module 11, 12. Thereby, a fluid which from the base module 11, 12 had, for example, reached by capillarity the inclined plane defined by the abutment element 15 would be brought back, by gravity, to the modular base 10.

The constraining means 13 can comprise a coupling opening 17, made on the first base module 11 and on the second base module 12, configured to allow a reciprocal insertion of adjacent base modules 11, 12. For example, the coupling opening 17 can be made on the first base module 11 and on the second base module 12, facilitating a reciprocal insertion of the base modules 11, 12 to determine an at least partial overlapping of the first base module 11 and the second base module 12. In particular, such an overlapping allows facilitating the insertion of the abutment element 15 in the housing 16, for example, by means of a relative rotation between the first base module 11 and the second base module 12 along a rotation axis shared by the planes defined by the base modules 11, 12 and passing through the coupling opening 17. Such an overlapping also gives continuity to the support portion for the animal and helps to prevent a leakage of liquids from the modular base 10.

For example, the sealing means 18 comprises a sealing element 19, preferably a plug, activatable on the at least one coupling opening 17 to prevent the passage of a flow of fluid. In particular, the sealing element 19 can be inserted or insertable in the coupling opening 17 to prevent a passage of a flow of fluid through the coupling opening 17 itself.

As illustrated in the attached figures, each base module 11, 12 has a fastening element 14, configured to fasten a respective abutment element 15 of a further base module, an abutment element 15, configured to be fastened by a respective fastening element 14 of the further base module, and a coupling opening 17, operatively connected to a respective coupling opening 17 of the further base module and configured to allow a partial reciprocal insertion of adjacent base modules 11, 12. In particular, the coupling opening 17 is at least partially interposed between the fastening element 14 and the abutment element 15. Thereby, the constraining means 13 can be configured to constrain the base modules 11, 12 by means of a reciprocal rotation along an axis parallel to the main lying plane and, preferably, passing through the coupling opening 17.

The fastening element 14 and the abutment element 15 comprise respective first ends 14a, 15a, proximal to the coupling opening 17, and second ends 14b, 15b, distal from the coupling opening 17. With particular reference to Figure 2B, the first end of the fastening element 14 is, in use, at least partially interposed between the first end of the abutment element 15 and the sealing element 19. In accordance with an advantageous aspect, the first end 14a of the fastening element 14 has an extension transverse to the main lying plane so as to generate an interstice with an increasing cross-section size 30 between the fastening element 14 and the abutment element 15. In particular, the interstice with an increasing cross-section size 30 is configured to reduce the effects of the capillarity of a fluid interposed between the first end 14a of the fastening element 14 and the first end 15a of the abutment element 15 so as to promote a permanence thereof inside the modular base 10.

According to a further advantageous aspect, the constraining means 13 comprises constraining portions 40, disposed at the aforementioned second ends 14b, 15b, reciprocally insertable to constrain the first base module 11 and the second base module 12. That is, the constraining portions 40 are operatively associated to make a shape coupling, preferably a snap coupling, between the fastening element 14 and the abutment element 15.

With particular reference to Figure 2C, the constraining portions 40 of the fastening element 14 and the constraining portions of the abutment element 15 define, in use, at least one interstice with an increasing cross-section size 50 adapted to reduce the effects of the capillarity of a fluid between them to prevent a passage thereof through the first base module 11 and the second base module 12. In particular, reference is made to a condition "in use" of the constraining portions 40 when the constraining portions 40 are inserted with each other.

According to a further advantageous aspect, the abutment element 15 has a vertical shoulder 60 (Fig. 2B) at least partially delimiting the coupling opening 17. In particular, the vertical shoulder 60 is configured to be disposed in abutment against the sealing element 19 to prevent a passage of a flow of fluid through the coupling opening 17. For example, the sealing element 19 can have a head 19a, a retaining portion 19b and a stem 19c. In particular, the vertical shoulder 60 can be configured to be disposed in abutment against the stem 19c of the sealing element 19. Furthermore, the vertical shoulder 80 can have a lower end operatively associated with at least the retaining portion 19b of the sealing element 19 to achieve a retention of the sealing element 19 in the coupling opening 17.

With particular reference to Figure 2B, the fastening element 14 can further comprise at least one upper protuberance 70 configured to abut against the sealing element 19 to prevent a passage of a flow of fluid between the fastening element 14 and the sealing element 19 towards the coupling opening 17.

According to a further advantageous aspect and as illustrated in Figure 2A, the sealing means 18 comprises at least one rib 80 projecting from the fastening element 14 adapted to be disposed abutting against the abutment element 15 to prevent a leakage of fluid from the modular base 10. Preferably, the rib 80 extends mainly along a direction parallel to a main extension direction of the fastening element 14. In accordance with further possible embodiments of the present invention not illustrated in the attached figures, the sealing means 18 can comprise at least one rib projecting from the abutment element 15 and/or from the sealing element 19 adapted to be arranged abutting against the fastening element 14 to prevent a leakage of fluid from the modular base 10.

In accordance with a possible embodiment of the present invention and as illustrated in the attached figures, the base modules 11, 12 can comprise at least one constraining edge 21, on which the constraining means 13 is at least partially disposed, and at least one perimeter edge 102, configured to be reversibly coupled, preferably by insertion, to at least one vertical wall 101 to at least partially form a modular bottom 100 for an animal cage. For example, the at least one perimeter edge 102 can extend along a direction transverse, preferably perpendicular, to the main lying plane of the modular base 10 for a length comprised between 150 millimetres and 550 millimetres, preferably 366 millimetres.

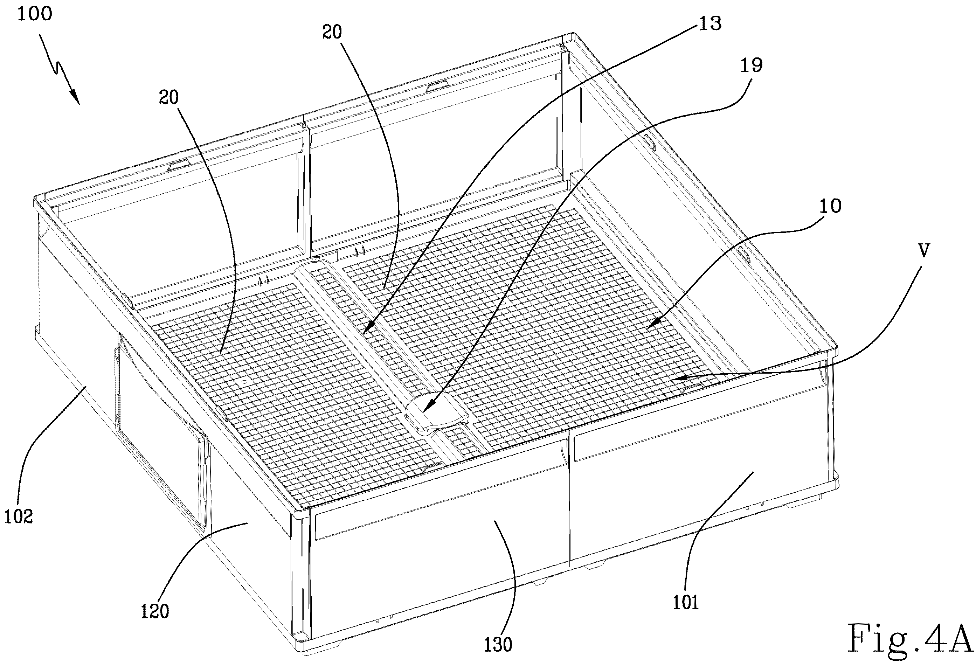

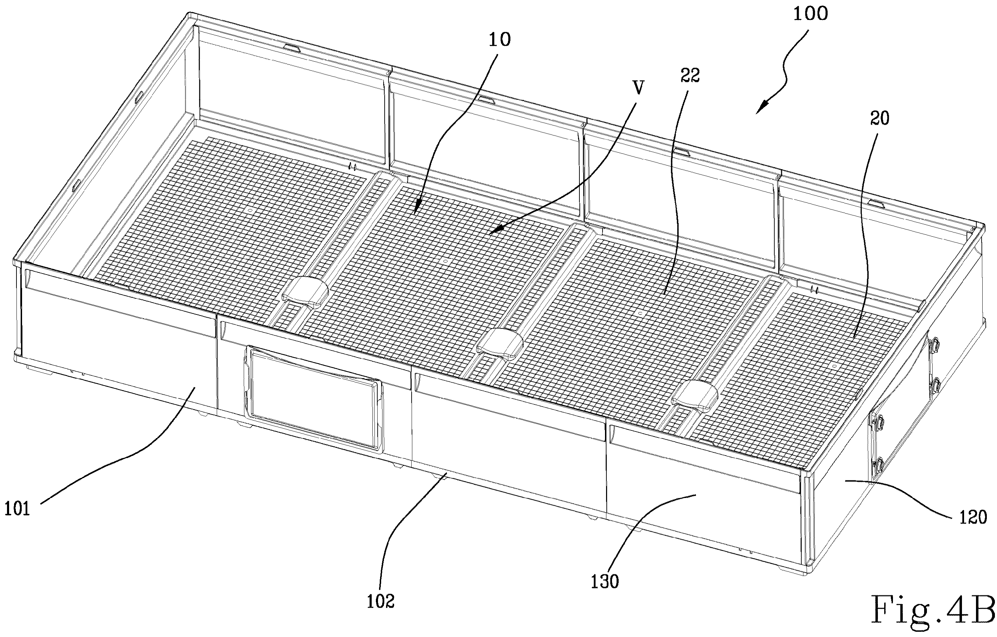

With particular reference to Figures 3A-3B, the base modules 11, 12 can comprise at least one end module 20 having a constraining edge 21 on which the constraining means 13 is at least partially disposed. Furthermore, the base modules 11, 12 can comprise at least one internal module 22 having a first constraining edge 23 and at least a second constraining edge 24 on which the constraining means 13 is at least partially disposed. Thereby, the present invention can allow to make a modular base 10 comprising a customisable succession of internal modules 22 interposed with a pair of end modules 20 (Fig. 4B) and/or a modular base 10 comprising a pair of end modules 20 connected to each other (Fig. 4A).

By way of non-limiting example, the base modules 11, 12 can have a quadrangular shape in which at least one side defines the constraining edge 21 or the first constraining edge 23 or the second constraining edge 24. In particular, the remaining sides can define, for example, a perimeter edge 102 of the modular base 10. Furthermore, the first constraining edge 23 and the second constraining edge 24 of the internal module 22 can be reciprocally facing. Purely by way of non-limiting example, the constraining means 13 is arranged on the first constraining edge 23 and on the second constraining edge 24 symmetrically relative to the centre of symmetry of the internal module 22.

In accordance with a further aspect, the present invention relates to a modular bottom 100 for an animal cage comprising a modular base 10 in accordance with what has been described above and a plurality of vertical walls 101 reversibly insertable or inserted to a perimeter edge 102 of the modular base 10 to define a containment volume "V" adapted to at least partially house an animal.

Purely by way of non-limiting example, the vertical walls 101 can extend vertically for a length comprised between 50 millimetres and 450 millimetres, preferably 200 millimetres.

Furthermore, the modular base 10 can have a plurality of insertion openings 103 and the vertical walls 101 can comprise a plurality of insertion elements 104. In particular, the insertion elements 104 can be configured to insert in the insertion openings 103 to connect the vertical walls 101 to the modular base 10.

In accordance with a possible embodiment and as illustrated in the attached figures, the end modules 20 can have three sides at least partially defining the perimeter edge 102 of the modular base 10, and one side defining the constraining edge 21. Furthermore, the internal modules 22 can have two sides, at least partially defining the perimeter edge 102 of the modular base 10, and two sides, respectively defining the first constraining edge 23 and the second constraining edge 24.

According to a further advantageous aspect, each vertical wall 101 can have a first vertical edge 105 and a second vertical edge 106 which are shaped complementarily and reciprocally insertable to make a modular wall defined by a plurality of vertical walls 101 connected in succession.

Advantageously, the plurality of vertical walls 101 can comprise at least one end wall 120 configured to insert on an end module 20. In particular, the end wall has a "C" shape consisting of a main wall and a pair of connecting walls, perpendicular to the main wall. Furthermore, the plurality of vertical walls 101 can comprise at least one internal wall 130, insertable on the end modules 20 and/or on the internal modules 22. In particular, the internal wall 130 is also connectable by means of insertion to the connecting walls of the end wall 120 and/or to a further internal wall 130.

In accordance with a further aspect, the present invention relates to a modular animal cage 1000 comprising a modular bottom 100 for an animal cage in accordance with what has been described above and a lid connectable to the modular bottom to define and delimit together with the modular bottom 100 the aforementioned containment volume "V".

In particular, the lid can comprise a plurality of grates 1001 reciprocally connectable to define a modular lid of the modular cage.

It is therefore noted that the present invention achieves the proposed objects by making a modular base for an animal cage, a modular bottom for an animal cage and an animal cage capable of overcoming the drawbacks of the prior art thanks to the presence of sealing means which guarantees a seal of the liquids, preventing a pouring thereof into the environment in which the animal cage is placed.

## Claims

1. A modular base (10) for an animal cage, said modular base (10) comprising:
- at least a first base module (11) defining at least a first portion of said modular base (10);
- at least a second base module (12) defining at least a second portion of said modular base (10);
- a constraining means (13) configured to stably constrain said at least a first base module (11) and said at least a second base module (12), said constraining means (13) extending along a direction that is transverse, preferably perpendicular, to a main plane in which said modular base (10) lies so as to generate a geometric interference against a reciprocal movement between said at least a first base module (11) and said at least a second base module (12) at least along a direction parallel to said main plane; wherein said constraining means (13) comprises at least one fastening element (14), disposed on said at least a first base module (11) and/or said at least a second base module (12), and at least one abutment element (15), disposed on said at least a first base module (11) and/or said at least a second base module (12); and wherein said at least one abutment element (15) is shaped complementarily to said at least one fastening element (14) and can be fastened by said at least one fastening element (14) in order to constrain said at least a first base module (11) and said at least a second base module (12);
- a sealing means (18) that is active or activatable on said constraining means (13) to prevent a leakage of fluid from said modular base (10);
**characterised in that** each of said at least a first base module (11) and at least a second base module (12) has:
- a fastening element (14) configured to fasten a respective abutment element (15) of a further base module;
- an abutment element (15) configured to be fastened by a respective fastening element (14) of a further base module;
- a coupling opening (17) operatively connected to a respective coupling opening (17) of the further base module and configured to allow a partial reciprocal insertion of adjacent base modules (11, 12), said coupling opening (17) being at least partially interposed between said fastening element (14) and said abutment element (15);
wherein said sealing means (18) comprises a sealing element (19), preferably a plug, inserted or insertable into said coupling opening (17) to prevent a passage of a flow of fluid through said coupling opening (17); **and in that** said fastening element (14) and said abutment element (15) comprise respective first ends (14a, 15a), proximal to said coupling opening (17), and second ends (14b, 15b), distal from said coupling opening (17); wherein said first end (14a) of said fastening element (14) is, during use, at least partially interposed between said first end (15a) of said abutment element (15) and said sealing element (19), said first end (14a) of said fastening element (14) extending transversely to said main plane so as to generate an interstice with an increasing cross-section size (30) between said fastening element (14) and said abutment element (15) and adapted to reduce the capillarity effects of a fluid interposed between said fastening element (14) and said abutment element (15).

2. The base in accordance with claim 1, wherein said constraining means (13) comprises constraining portions (40), disposed at said second ends (14b, 15b) of said fastening element (14) and of said abutment element (15), which can be reciprocally engaged to constrain said first base module (11) and said second base module (12).

3. The base in accordance with claim 2, wherein, during use, said constraining portions (40) of said fastening element (14) and said constraining portions (40) of said abutment element (15) together define at least one interstice with an increased cross-section size (50) adapted to reduce the capillarity effects of a fluid interposed between them to prevent a passage of a flow of fluid through said first base module (11) and said second base module (12).

4. The base in accordance with one or more of the preceding claims, wherein said at least one abutment element (15) has a vertical shoulder (60) at least partially delimiting said coupling opening (17), said vertical shoulder (60) being configured to abut against said sealing element (19) to prevent a passage of a flow of fluid through said coupling opening (17).

5. The base in accordance with one or more of the preceding claims, wherein said at least one fastening element (14) comprises at least an upper protuberance (70) configured to abut against said sealing element (19) to prevent a passage of a flow of fluid between said fastening element (14) and said sealing element (19) towards said coupling opening (17).

6. The base in accordance with one or more of the preceding claims, wherein said sealing means (18) comprises at least one rib (80) projecting from said at least one fastening element (14) and adapted to abut against said at least one abutment element (15) to prevent a leakage of fluid from said modular base (10); and/or wherein said sealing means (18) comprises at least one rib projecting from said at least one abutment element (15) and adapted to abut against said at least one fastening element (14) to prevent a leakage of fluid from said modular base (10).

7. The base in accordance with one or more of the preceding claims, wherein said at least one fastening element (14) and said at least one abutment element (15) project from a perimeter portion of a respective base module (11, 12); and wherein said at least one abutment element (15) defines a plane that is inclined relative to said main plane in which said modular base (10) lies and is adapted to promote a downflow, by gravity, of a fluid from said abutment element (15) to the respective base module (11, 12).

8. The base in accordance with one or more of the preceding claims, wherein said base modules (11, 12) comprise at least one constraining edge (21), on which said constraining means (13) is at least partially disposed, and at least one perimeter edge (102), configured to be reversibly coupled, by insertion, to at least one vertical wall (101) in order to at least partially form a modular bottom (100) for an animal cage.

9. A modular bottom (100) for an animal cage comprising:
- a modular base (10) in accordance with one or more of the preceding claims;
- a plurality of vertical walls (101) which are reversibly insertable or inserted into a perimeter edge (102) of said modular base (10) so as to define a containment volume (V) suitable for at least partially accommodating an animal.
